# EUROPEAN PATENT APPLICATION

(11) **EP 1 605 068 A2**
(43) Date of publication of application: **14.12.2005**
(21) Application number: 05253593.7
(22) Date of filing: 10.06.2005
(51) Int. Cl.: C21D 9/50, B23K 26/34, B23K 26/42, B23P 6/00, F01D 5/00

(54) **Homogeneous welding via pre-heating for high strength superalloy joining and material deposition**

(30) Priority: 10.06.2004 US 865119
(71) Applicant: UNITED TECHNOLOGIES CORPORATION, Hartford, CT 06101 (US)
(72) Inventor: Rabinovich, Albert, West Hartford, Connecticut 06107 (US); Shubert, Gary, East Hampton, Connecticut 062424-1344 (US); Ivory, Steven, Manchester, Connecticut 06040 (US)
(74) Representative: Hall, Matthew Benjamin

(57) **Abstract**

A method of homogeneously welding a superalloy which includes preheating the superalloy prior to welding and allowing it to cool prior to welding. The alloy is then welded, cooled to room temperature and then heated to stress relieve.

## Description

The present invention relates in general to welding, and more specifically to a method of homogeneous welding superalloys using preheating to reduce residual stress.

An inherent consequence of successive metal deposition processes used in manufacturing and repair of aerospace components, is the development of residual stresses. Although residual stress can clearly reduce the strength or life of mechanical parts, it also impacts the integrity and feasibility of subsequent processing operations. For example, cracks can develop during heat treatment processes subsequent to epitaxial weld repairs of an airfoil platform. One of the main factors that limit the quality of parts made by this and other deposition processes is excessive residual stress. A part with high post-weld residual stress can also cause severe distortion during subsequent machining operations.

Homogeneous welding at elevated temperature is one of the latest advancements in the repair of cast super alloy HPT (high-pressure turbine) hardware because it results in significantly less property debit than that associated with conventional welding. Typical prior art patents which relate to this technology includes U.S. Patents 5,897,801, 5,554,837, 614,568, 5,374,319, 6,084,196 and 5,106,010.

It has been recently discovered, through analytical modeling, that homogeneous welding can be advantageously accomplished with a preheating treatment. Modeling has shown the potential of this technique to improve weldability by lowering stress associated with solidification, mechanical constraint, and the thermal gradients, which will mitigate the probability of weld cracking and subsequent post weld heattreat cracking.

Key deposit characteristics of a specific deposition process have been studied using nonlinear thermal-mechanical finite element simulations and analysis of the governing nondimensional thermal and mechanical process variables. The thermal-mechanical models which are used in the development of the present invention were designed to capture residual stress magnitudes and to demonstrate their link to defined temperature gradients.

As will be discussed and shown hereinafter certain unique advantages can be obtained by homogeneous welding via pre-heating for high strength cast superalloys.

It is therefore an object of the present invention to provide a method of homogeneous welding which overcomes the problems of the prior art described above.

It is another object of the present invention to provide a method of welding superalloys which reduces residual stress.

It is yet another object of the present invention to provide a method of repairing an article by homogeneous welding which includes preheating to reduce residual stress.

The present invention relates to the use of a preheating step in a conventional homogeneous welding process of superalloys in order to reduce residual stress. The process sequence includes preparing the article to be welded by cleaning and removing any damaged material. The entire article or a specific localized area of the article is then preheated to an elevated temperature for a time sufficient for the article to stabilize at temperature. The preheat source is then shut off. The article is then welded at a preselected location requiring repair. The welded article is then cooled to room temperature followed by heating to stress relief the article. The superalloy may be any conventional nickel base superalloy.

This technology may be applied to epitaxial welding, high strength weld filler development, and HPT Blade tip restoration. It may also be applied to the repair of turbine airfoil hardware.

Preferred embodiments of the present invention will now be described by way of example only and with reference to the accompanying drawings in which:
FIG. 1 is a perspective view of an airfoil platform illustrating equivalent residual stress with no preheating of the substrate material.
FIG. 2 is a perspective view of an airfoil platform illustrating axial residual stress with no preheating of the substrate material.
FIG. 3 is a perspective view of an airfoil platform illustrating equivalent residual stress after preheating the substrate material to 790°C (1450°F).
FIG. 4 is a perspective view of an airfoil platform illustrating axial residual stress after preheating the substrate material to 790°C (1450°F).
FIG. 5 is a perspective view of an airfoil platform illustrating equivalent residual stress after preheating the substrate material to 955°C (1750°F).
FIG. 6 is a perspective view of an airfoil platform illustrating axial residual stress after preheating the substrate material to 955°C (1750°F).
FIG. 7A is a top view of a HPT blade platform showing a damaged area.
FIG. 7B is a side perspective view of the platform shown in FIG. 7A.
FIG. 8 is a view of the platform of FIG 7A with the damaged area removed.
FIG. 9 is a perspective view a laser welding and heating set-up for welding the damaged area illustrated by the arrow in FIG. 8.
FIG. 10A is a top view of the weld repair carried out by the set-up shown in FIG. 9.
FIG. 10B is a top view of the finished machined part from the weld repair of FIG. 10A.

In the present invention two important mechanisms were identified for reducing maximum residual stress that can be achieved through the manipulation of process variables. The first is activated primarily by changes in laser velocity and power, and the second is activated primarily by uniform part preheating.

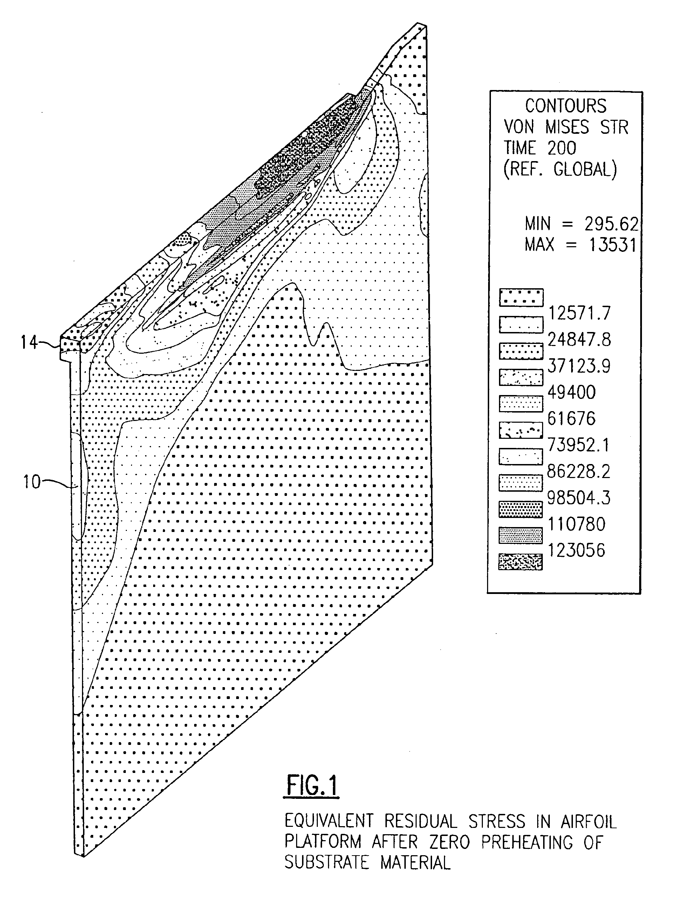

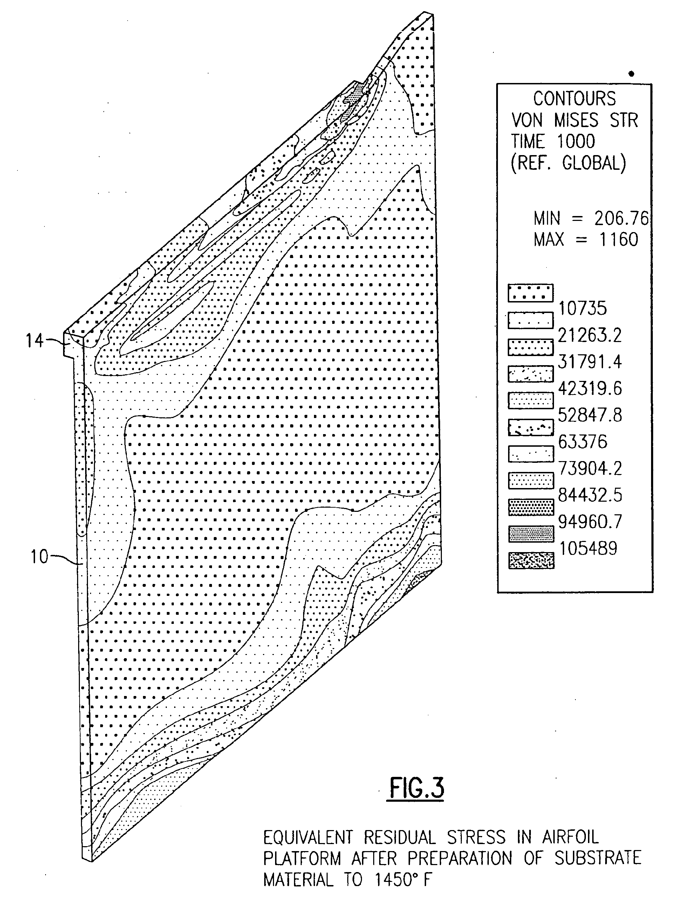

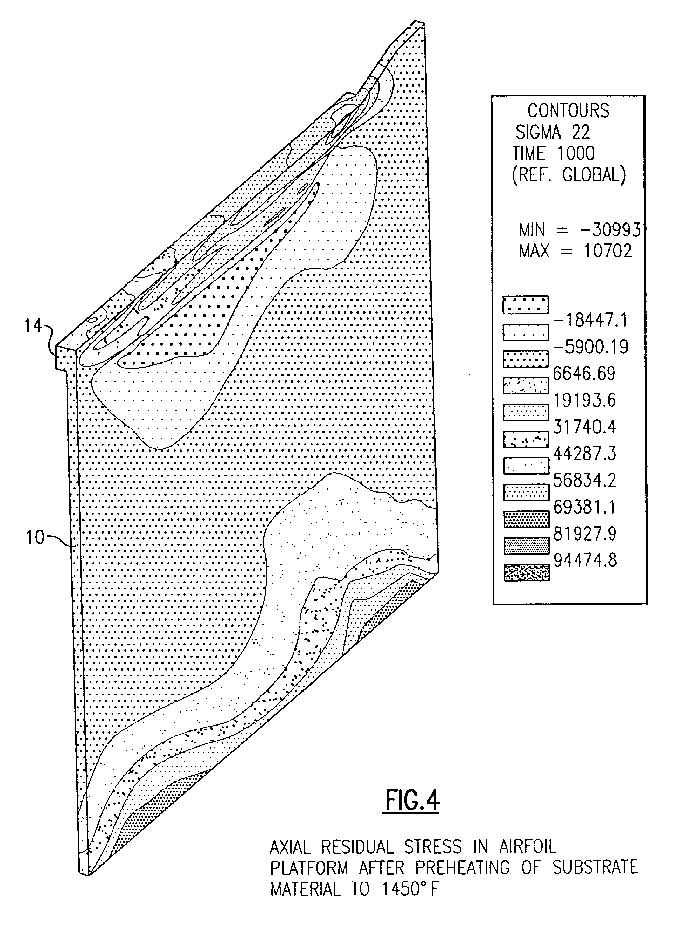

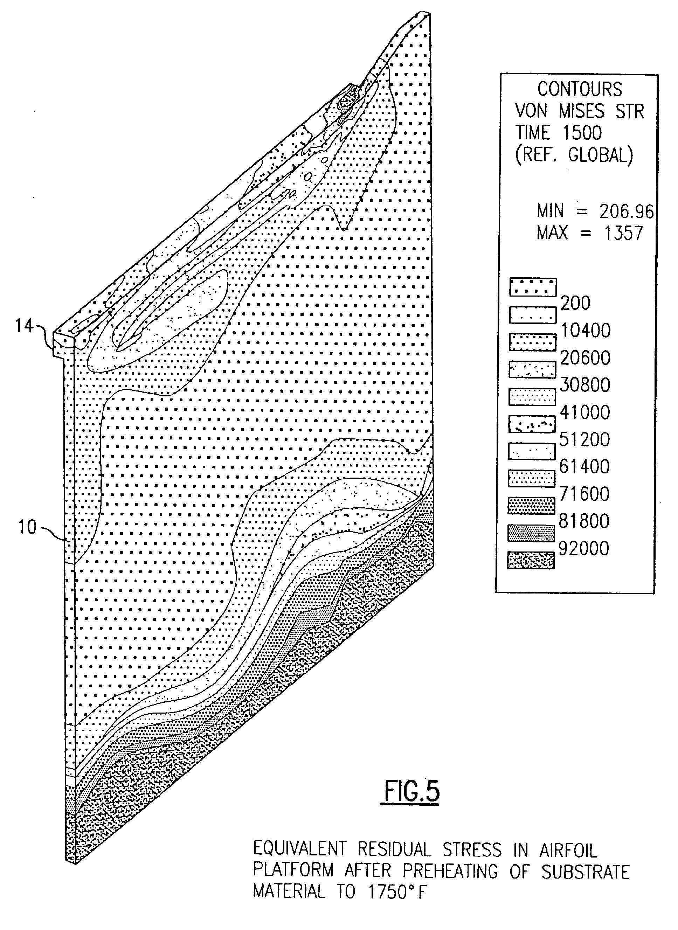

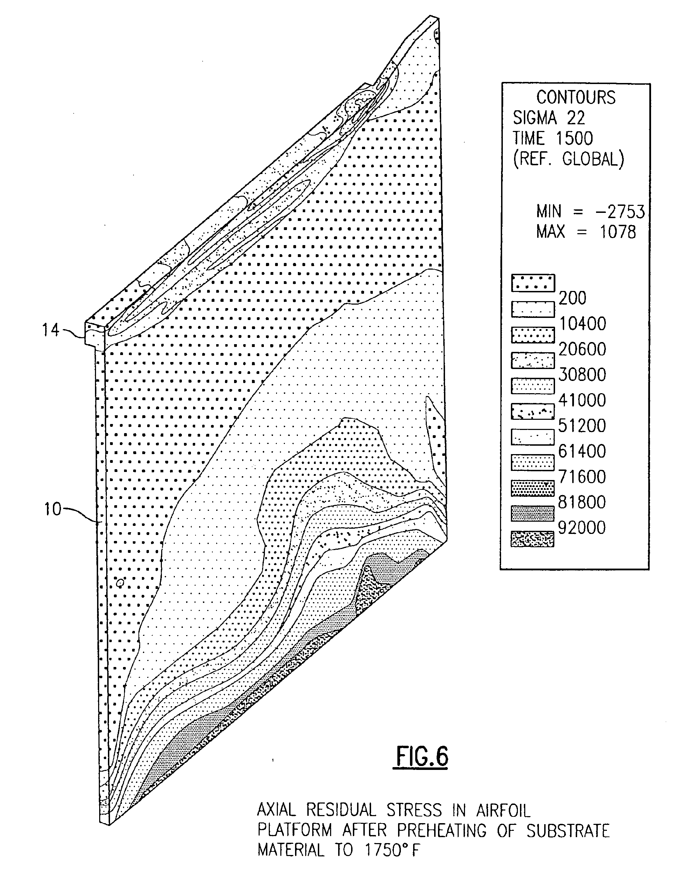

Figures 1 through 6 of the drawings compare the numerical results of equivalent and axial residual stress at various preheat temperatures for an airfoil platform repair process. It is clear that the uniform part preheating considerably reduces the residual stress. Some reduction of residual stress is due to reductions in thermal strain differences, but most of the reductions due to preheating come form reducing the effective yield stress. The yield stress of nickel-based superalloys decreases as the temperature increases. By preheating the part, the maximum residual stress is limited by the maximum yield stress.

At large levels of base plate preheating, the reduction in residual stress is a very weak function of laser velocity and power. Thus at large levels of preheat, the full range of power and velocity can be used with minimal effects on maximum residual stress magnitudes.

More specifically, Figures 1 through 6 illustrate the results from an elastic-plastic coupled thermal-mechanical-metallurgy analysis of a laser powder deposition repair process with a simplified geometry of an airfoil 10 and root 14. In each case the base material is modeled with a different level of preheat, from zero to 955°C (1750°F), as described in the figure title. Figures 1, 3 and 5 show contour plot of the residual Von Mises Stress distribution subsequent to four passes of material deposition on the root area. The maximum stress in the repaired area is seen to be approximately 930MPa (135ksi), 675MPa (98ksi), and 635MPa (92ksi) respectively. These three figures demonstrate that there is a substantial benefit in reduced maximum equivalent residual stress in preheating to 790°C (1450°F) as compared to no preheating. However, an increased level of preheating of 955°C (1750°F) has a much less significant increase in benefit over preheating to 790°C (1450°F).

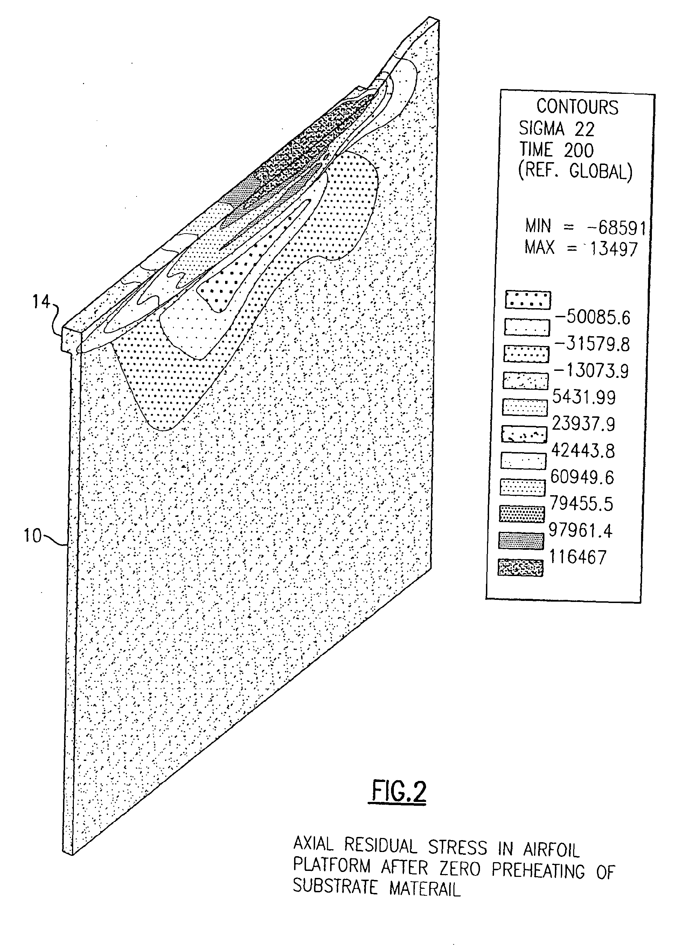

Figures 2, 4 and 6 show contour plot of the residual Axial Stress distribution, also subsequent to four passes of material deposition on the root area. The maximum stress in the repaired area is seen to be approximately 930MPa (135ksi), 740MPa (107ksi) and 635MPa (92ksi) tensile respectively. These three figures demonstrate that there is a substantial benefit in reduced maximum axial residual stress in preheating to 790°C (1450°F) as compared to no preheating as well. Also, an increased level of preheating to 955°C (1750°F) has a much less significant increase in benefit over preheating to 790°C (1450°F).

In the present invention the preheating is typically carried out in the range of about 790 to 1300°C (1450 to 2370°F).

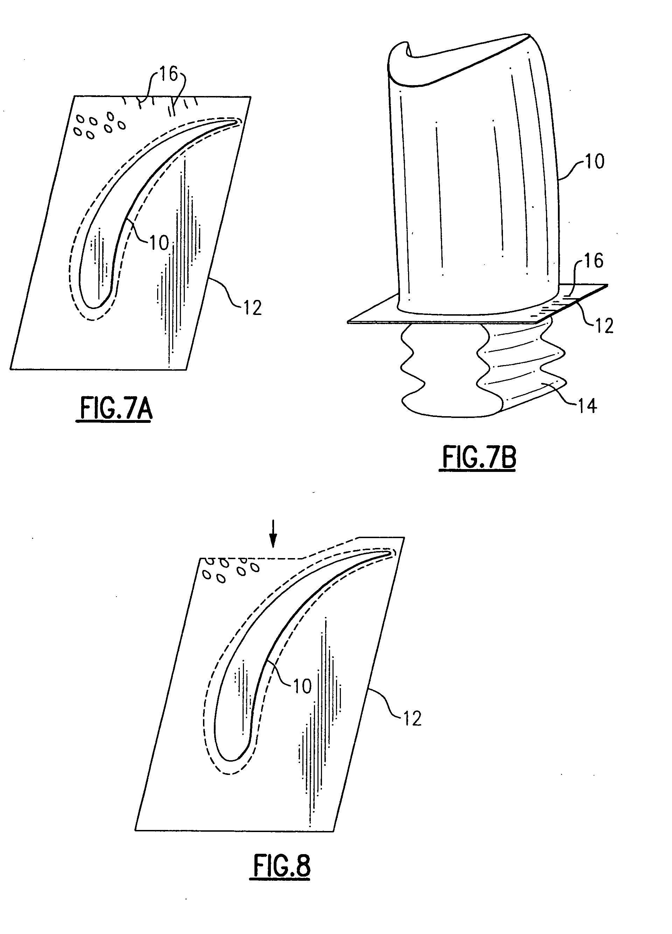

Figures 7A-10B illustrates a typical weld repair process of the present invention carried out on a section of an airfoil of a gas turbine engine component, such as a HPT blade platform made of a suitable nickel base superalloy. This repair method is applicable to any HPC or HPT component or to any product composed of a difficult to weld alloy such as those alloys described above. For simplicity, a description of this process will be exemplified on the repair of the trailing edge platform of a HPT blade platform.

In carrying out the present invention a suitable group of superalloys include gamma-prime phase nickel base alloys. Typical alloys have the flowing AISI alloy designations or brand names: Mar-M247, IN100, In738, IN792, Mar-M200, B 1900, RENE80, Alloy 713 and their derivatives.

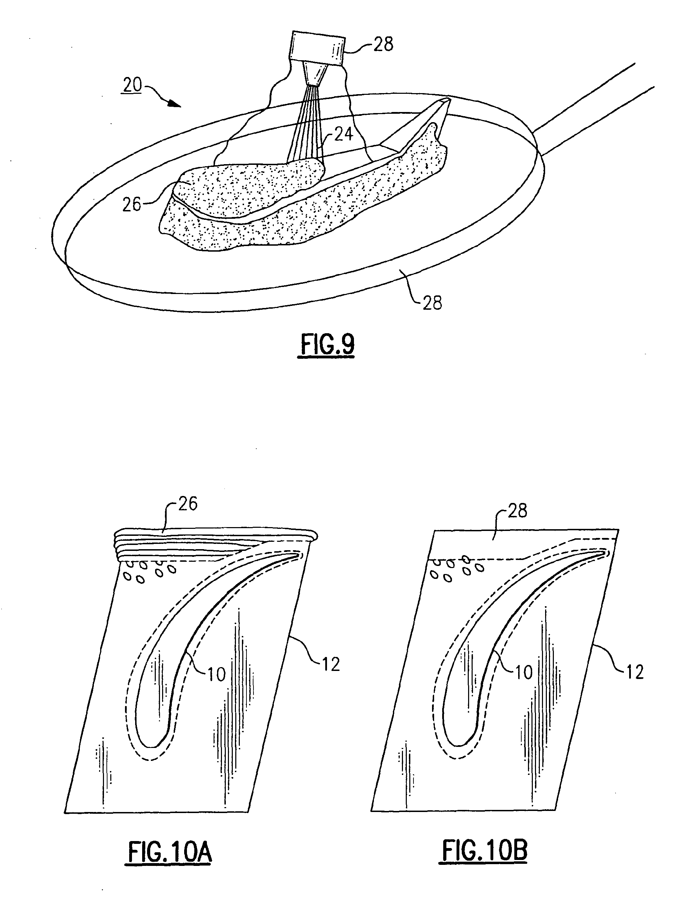

As illustrated in Figs. 7A and 7B, an airfoil 10 having a platform 12 and root 14 exhibits a damaged area or cracks 16. In Fig. 8 the damage area has been removed by machining to form a weld surface illustrated by the arrow. Fig. 9 illustrates a laser welding and heating set-up or station 20 in which the weld surface shown in Fig. 8 is repaired by a weld deposit. In operation, laser 22 generates a powder feed 24, which upon contact by the laser, forms a weld deposit 26 in the weld surface area. The powder feed composition is identical or similar to the alloy composition of the component being repaired. Induction coil 28 provides for the source of preheat.

Fig. 10A illustrates the finished weld repair, and Fig. 10B shows the finished machined HPT blade platform.

A typical sequence for a repair process for a blade platform which includes the preheating step is as follows:
a. Remove all thermal barrier coating and oxidation coating, and clean the blade by removing all of the debris and smut.
b. Machine the blade to remove the damaged material (Fig. 8).
c. Heat treat to eliminate residual stresses (1080°C (1975°F) for 40 minutes).
d. Inspect the machined surface for any remaining cracks using any of the following, all of the cracks must be removed prior to welding (recycle through b-d if any residual cracking detected) (Fig. 8).
   i. Fluorescent penetrant inspect (FPI).
   ii. Visual inspection.
   iii. X-ray.
e. Chemically clean the weld surface of the platform to remove any oxides or other foreign material.
f. Weld (Fig. 9).
   i. Preheat the component to a temperature necessary to accomplish a quality weld (ranging from 790°C-1090°C (1450°F-2000°F)).
   ii. Soak the part at preheat temperature until the temperature stabilizes.
   iii. Turn off the external heating.
   iv. Weld.
g. Cool the blade to room temperature or proceed directly to step (h).
h. stress relieve (1080°C ± 15°C (1975°F ± 25°F)) for 40 minutes.
i. machine back to contour (Figs 10A and 10B).

While the present invention has been particularly shown and described with reference to the preferred mode as illustrated in the drawing, it will be understood by one skilled in the art that various changes in detail may be effected therein without departing from the scope of the invention as defined by the claims.

## Claims

1. A method of homogenously welding an article made of a superalloy which comprises:
(a) preheating a damaged article requiring repair to an elevated temperature and for a time sufficient for said article to stabilize at said elevated temperature;
(b) ending said preheat step;
(c) welding said article at a preselected location requiring repair; and
(d) heating said welded article to a temperature and for a time sufficient to stress relieve said article.

2. A method of repairing a damaged article made of a superalloy which comprises:
(a) removing said damaged material;
(b) preheating said article to an elevated temperature and for a time sufficient for said article to stabilize at said elevated temperature;
(c) ending said preheat step;
(d) welding said article at a preselected location requiring repair;
(e) cooling said welded article to room temperature; and
(f) heating said welded article to a temperature and for a time sufficient to stress relieve said article.

3. A method of welding an article made of a superalloy which comprises:
(a) preheating said article to an elevated temperature and for a time sufficient for said article to stabilize at said temperature;
(b) ending said preheat step;
(c) welding said article at a predetermined location; and
(d) cooling said article to room temperature.

4. The method of claim 3 in which following step (d) the article is stress relieved at an elevated temperature.

5. The method of any of claims 1,2 or 4 in which the stress relief is carried out at about 1080°C ± 15°C (1975°F ± 25°F).

6. The method of any preceding claim in which the preheating is carried out in a temperature range of about 790 to 1300°C (1450 to 2370°F), and the superalloy is a gamma-prime phase nickel base alloy.

7. The method of any preceding claim in which the article is a gas turbine engine component.

8. The method of claim 7, wherein said gas turbine engine component is selected from the group consisting of an airfoil, airfoil platform and a turbine blade.

9. The method of any preceding claim, wherein said welding step comprises laser welding.
